# EUROPÄISCHE PATENTANMELDUNG

(11) **EP 3 659 751 A1**
(43) Veröffentlichungstag der Anmeldung: **03.06.2020**
(21) Anmeldenummer: 19208784.9
(22) Anmeldetag: 13.11.2019
(51) Int. Cl.: B25C 1/18

(54) **HALTECLIP ZUM HALTEN EINER ROHRSCHELLE O. DGL. AN EINEM LAUF EINES SCHUBGERÄTS**

(30) Priorität: 19.11.2018 DE 102018128964
(71) Anmelder: Adolf Würth GmbH & Co. KG, 74653 Künzelsau (DE)
(72) Erfinder: Franz, Gerhard, 74549 Wolpertshausen (DE)
(74) Vertreter: Dilg, Haeusler, Schindelmann Patentanwaltsgesellschaft mbH

(57) **Zusammenfassung**

Halteclip (1) zum Halten einer Rohrschelle o.dgl. (3) an einem Lauf (5) eines Schubgeräts zum Eintreiben von Befestigungselementen (7), insbes. Nägeln, durch die Rohrschelle (3) und in einen Untergrund (9) zum Befestigen der Rohrschelle (3) an dem Untergrund (9), mit einem Mündungsschenkel (1M) zur Aufnahme der Mündung des Laufs (5) und einem Untergrundschenkel (1U) zur Anlage an dem Untergrund (9), wobei die Schenkel (1M, 1U) durch einen Verbindungsabschnitt (1V) miteinander verbunden sind und jeweils an der Rohrschelle (3) anliegen, so dass die Schenkel (1M, 1U) den Halteclip (1) klemmend an der Rohrschelle (3) halten.

## Beschreibung

Die Erfindung betrifft einen Halteclip zum Halten einer Rohrschelle o.dgl. an einem Lauf eines Schubgeräts sowie eine Rohrschelle o.dgl. mit einem auf diese gesteckten Halteclip.

Beim Bau von Gebäuden werden insbesondere im Massivbau eine Reihe von Haltern mittels Schubgeräten an dem Gebäude befestigt. Halter zum Halten von Elektroleitungen oder Kabeln werden typischerweise an einer Wand verankert bzw. befestigt, indem der Halter an der Wand des Gebäudes an der gewünschten Stelle von Hand angeordnet wird und dann mittels eines Schubgerätes ein Nagel durch den Halter und in die Wand geschossen wird, so dass der Halter an der Stelle an der Wand fixiert ist. Ferner werden auf diese Weise bspw. Rohrschellen an dem Gebäude befestigt, bspw. für die folgende Montage von Warm- oder Kaltwasserleitungen oder Gasleitungen. Ferner ist bekannt, einen Nagel mittels eines Schubgeräts durch eine Scheibe, bspw. in der Art einer Unterlegscheibe, in einen Untergrund zu schießen, wobei die Scheibe dann eine Rohrschelle o.dgl. an dem gewünschten Ort an dem Untergrund hält, s. bspw. EP1682312B1.

Unter einem Schubgerät ist vorliegend ein Gerät zu verstehen, das mittels Gas oder Druckluft oder einem Pulver betrieben wird, um die Energie zum Eintreiben des Befestigungselements bereit zu stellen.

Aus der EP 1 682 312 B1 ist eine Befestigungsanordnung bekannt, die ein Befestigungsteil umfasst, das dazu eingerichtet ist, an einem Werkstück montiert und an dem Werkstück durch ein Verbindungselement gesichert zu werden, das von einem Magazin eines Eintreibgeräts bereitgestellt wird und durch das Eintreibgerät in und durch die Befestigungsanordnung getrieben wird, um sich durch das Befestigungsteil und in das Werkstück zu erstrecken und die Befestigungsanordnung von dem Eintreibwerkzeug zu lösen. Erfindungsgemäß ist ein verformbares Element mit einem ersten Teil, der in einer Öffnung, die in dem Befestigungsteil vorgesehen ist, einrastet und aus dieser herausragt, und einem zweiten Teil, der von dem ersten Teil gestützt wird und zum Einrasten in einen Verbindungselementaustritt eines Eintreibgeräts verformbar ist, vorgesehen, wobei der zweite Teil des verformbaren Elements eine Breite w aufweist, das verformbare Element eine Höhe b in einer Richtung aufweist, die zu der Breite lotrecht ist, und das Verhältnis der Höhe zu der Breite kleiner als Eins ist.

Aus der JP1985056809U ist ferner das Einschießen eines Nagels durch einen Halter bekannt, der eine Scheibe trägt. Der Halter wird in dem Lauf des Schubgeräts vor dem Einschießen des Nagels angeordnet und wird beim Einschießen zerstört.

Aus der EP 1 226 900 B1 und EP 0 338 554 A2 ist ferner das Verschrauben von Rohrschellen o.dgl. an einem Untergrund bekannt. Bei der EP 0 338 554 A2 weist das Verschraubungsgerät einen speziellen Vorsatz auf, um eine Schraube mit vormontierter Haltescheibe seitlich in den Lauf des Verschraubungsgeräts einzuführen.

Ein Nachteil der Verschraubung ist, dass diese auf Grund des Verschraubungsvorgangs im Vergleich zum Einschießen von Befestigungselementen, bspw. Nägeln, relativ lange dauert. Ein Nachteil der speziellen Vorsätze, bpsw. des aus EP 0 338 554 A2 bekannten, ist, dass diese gesondert angefertigt und auf den jeweiligen Befestigungsfall angepasst werden müssen. Ein Nachteil der Anordnung von Haltern in dem Lauf des Schubgeräts, wie bspw. aus der JP1985056809U bekannt, ist, dass diese beim Einführen in den Lauf verkanten können, weshalb dies eine gewisse Aufmerksamkeit und saubere Handhabung erfordert.

Aufgabe der vorliegenden Erfindung ist es daher, einen Halteclip zum Halten einer Rohrschelle o.dgl. an einem Lauf eines Schubgeräts anzugeben, der einfach zu handhaben ist..

Die Aufgabe wird erfindungsgemäß durch einen Halteclip gemäß Anspruchs 1 gelöst, der auf eine Rohrschelle o.dgl. steckbar ist.

Vorteilhaft ist der Halteclip einstückig gebildet und besteht aus einem Kunststoff, insbesondere einem glasfaserverstärktem Kunststoff, oder Metall, insbesondere Federstahl.

Der Mündungsschenkel, der Untergrundschenkel und der Verbindungsabschnitt bilden in einer Seitenansicht bevorzugt eine U-Form.

Mit Vorteil liegen der Mündungsschenkel und/oder der Untergrundschenkel und/oder der Verbindungsabschnitt flächig an der Rohrschelle an, um eine möglichst große Anlagefläche bereit zu stellen, um die Rohrschelle möglichst gut zu halten.

Der Mündungsschenkel und/oder der Untergrundschenkel und/oder der Verbindungsabschnitt können mindestens einen Abstandsfuß aufweisen, so dass die Schenkel im eingesetzten Zustand mit Abstand von der Rohrschelle angeordnet sind.

Bevorzugt ist der Mündungsschenkel als Ringabschnitt oder als Ring gebildet, um die Mündung des Laufs mindestens teilweise zu umschließen, insbesondere mind. 50%, bevorzugt mind. 60% und weiter bevorzugt mind. 75% zu umschließen, um den Halteclip mit der Rohrschelle an dem Lauf definiert zu halten, d.h. in einer vorbestimmten Position zu halten.

Mit Vorteil ist der Mündungsschenkel als Ringabschnitt gebildet, so dass die Mündung des Laufs seitlich durch den fehlenden bzw. offenen Ringabschnitt in den Mündungsschenkel eingeführt werden kann. Dies ist vorteilhaft im Vergleich zu einem auf den Lauf bezogenen axialen Aufsetzen des Halteclips auf den Lauf, da die Schubgeräte in der Regel eine Andrucksicherung haben, die durch das axiale Aufstecken des Halteclips entriegelt werden könnte, so dass das Gerät dann schussbereit wäre.

Bevorzugt ist der Untergrundschenkel stabförmig ausgebildet, weist insbesondere einen rechteckigen Querschnitt auf und weist weiter bevorzugt eine Rastnase am freien Ende zum Eingreifen in eine Vertiefung oder Ausnehmung der Rohrschelle auf, um den Halteclip an der Rohrschelle definiert zu halten, d.h. in einer vorbestimmten Position zu halten.

Mit Vorteil ist der Verbindungsabschnitt stabförmig ausgebildet und weist insbesondere einen rechteckigen Querschnitt auf.

Bevorzugt ist der Mündungsschenkel als Ringabschnitt gebildet, weist insbesondere einen rechteckigen Querschnitt auf und der Verbindungsabschnitt ist vorteilhaft mittig im Umfang des Ringabschnitts angeordnet, um eine symmetrische Haltekraft auf die Rohrschelle auszuüben.

Mit Vorteil ist der Mündungsabschnitt als Ringabschnitt oder als Ring gebildet und weist insbesondere vier Abstandsfüße, insbesondere mit gleichem Winkelabstand untereinander, auf, wodurch der Mündungsschenkel mit Abstand zu der Rohrschelle im zusammengesetzten Zustand angeordnet ist.

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: eine perspektivische Ansicht eines erfindungsgemäßen Halteclips,
- Fig. 2: eine Seitenansicht des Halteclips der Fig. 1,
- Fig. 3: eine perspektivische Ansicht des Halteclips der Fig. 1, der auf eine Rohrschelle gesteckt ist,
- Fig. 4: eine weitere perspektivische Ansicht der Anordnung der Fig. 3 von unten,
- Fig. 5: eine Seitenansicht des Halteclips mit Rohrschelle der Fig. 3, wobei eine Mündung eines Laufs eines Schubgeräts mit darin angeordnetem Nagel in den Halteclip eingeführt ist und der Halteclip an einem Untergrund anliegt,
- Fig. 6: eine perspektivische Ansicht des Halteclips der Fig. 1, der in einer anderen Orientierung als in Fig. 1 auf eine Rohrschelle gesteckt ist,
- Fig. 7: eine perspektivische Ansicht des Halteclips der Fig. 1, der auf eine Haltescheibe gesteckt ist, und
- Fig. 8: eine perspektivische Ansicht des erfindungsgemäßen Halteclips, der auf eine alternative Rohrschelle gesteckt ist.

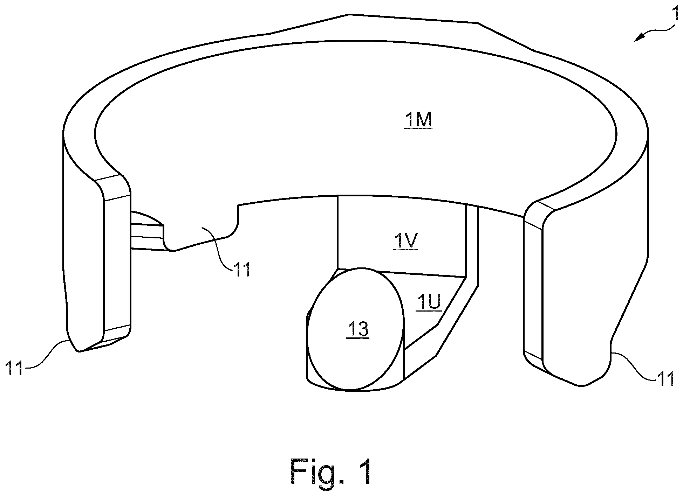

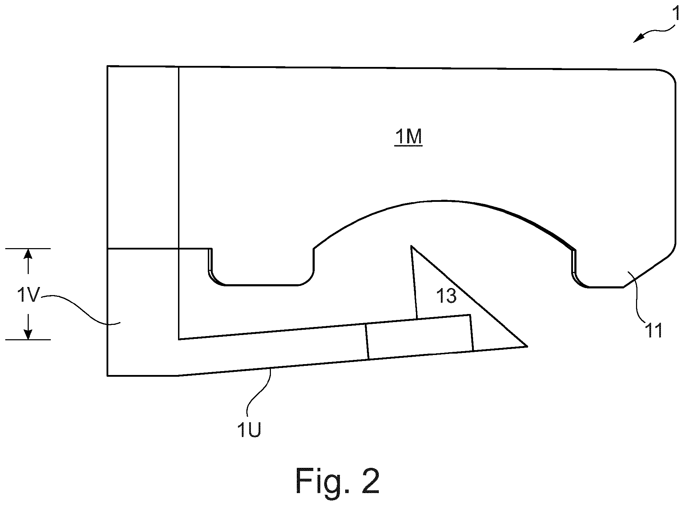

Die Figuren 1 und 2 zeigen einen erfindungsgemäßen Halteclip 1 in einer perspektivischen bzw. einer seitlichen Ansicht. Der Halteclip 1 weist einen Mündungsschenkel 1M, einen Untergrundschenkel 1U sowie einen Verbindungsabschnitt 1V zwischen den beiden Schenkeln 1M, 1U auf. Der Halteclip 1 ist einstückig aus Kunststoff in einem Spritzgussverfahren hergestellt.

Der Mündungsschenkel IM ist als offener Ringabschnitt gebildet, wobei der Ring zu rund 60% im Umfang gebildet ist. Entlang des Umfangs des Mündungsschenkels 1M ist mittig der Verbindungsabschnitt 1V zur Verbindung mit dem Untergrundschenkel 1U angeordnet. Der Mündungsschenkel IM weist einen rechteckigen Querschnitt auf, wobei er in radialer Richtung nur eine geringe Höhe (vorliegend 1,50mm, insbesondere 0,5-4mm, vorzugsweise 1-3mm) und in axialer Richtung eine circa sechsmal größere Höhe (vorliegend 5mm, insbesondere 2-10mm, vorzugsweise 3-8mm) aufweist. Entlang des Umfangs sind in axialer Richtung in Richtung des Untergrundschenkels 1U vier Abstandsfüße 11 angeordnet, die spiegelsymmetrisch zu einer Symmetrieebene des Halteclips angeordnet sind und untereinander den gleichen Winkelabstand aufweisen. Der Mündungsschenkel IM ist dazu vorgesehen, die Mündung eines Laufs eines Schubgeräts zu umfassen.

Der Untergrundschenkel 1U ist im Wesentlichen stabförmig gebildet und erstreckt sich von dem Verbindungsabschnitt 1V ausgehend mit einem rechteckigen Querschnitt radial nach innen. An dem freien Ende des Untergrundschenkels 1U ist eine Rastnase 13 in Form einer kreisförmigen Schrägfläche angeordnet. Der Untergrundschenkel 1U ist dazu vorgesehen, beim Setzen einer Rohrschelle 3 zwischen der Rohrschelle 3 und einem Untergrund 9, an dem die Rohrschelle 3 befestigt werden soll, angeordnet zu werden.

Der Verbindungsabschnitt 1V erstreckt sich zwischen den beiden Schenkeln 1M, 1U mit einem rechteckigen Querschnitt und ist ebenfalls stabförmig gebildet.

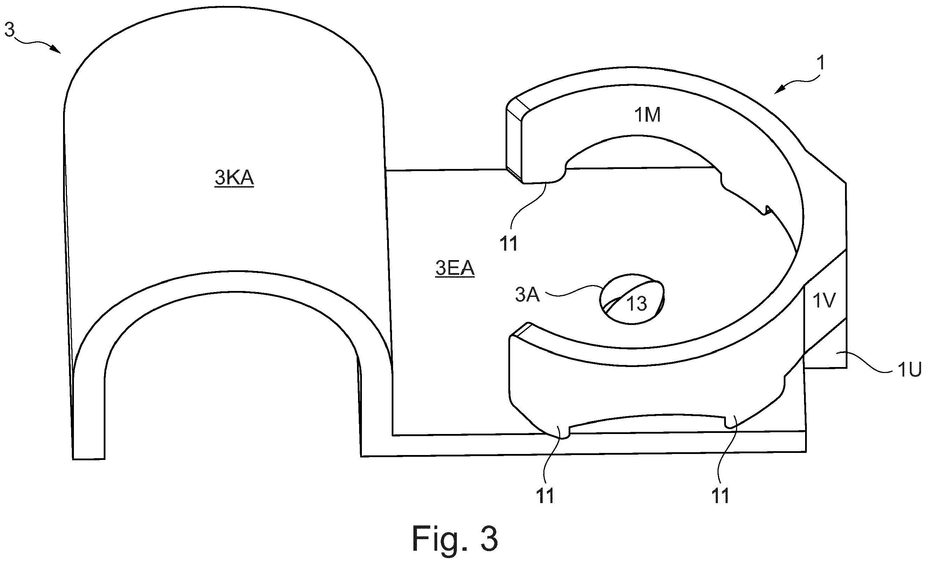

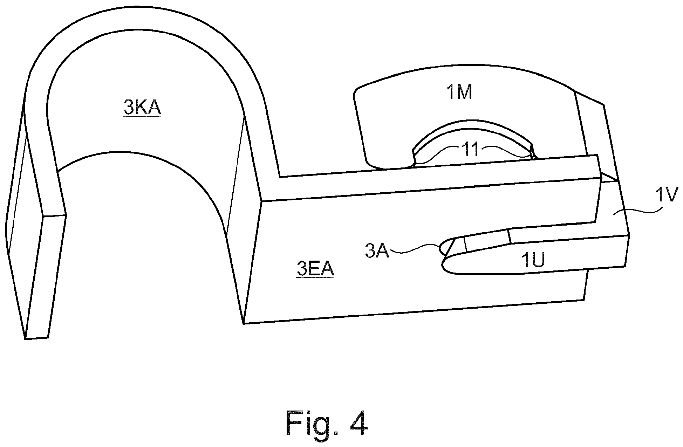

Die Figuren 3 und 4 zeigen den Halteclip lauf eine Rohrschelle 3 gesteckt. Die Rohrschelle 3 weist einen im Wesentlichen kreisförmigen Abschnitt 3KA, unter dem im eingebauten Zustand bspw. eine Elektroleitung angeordnet ist, sowie einen ebenen Abschnitt 3EA, in dem eine Ausnehmung 3A, ein Durchgangsloch, angeordnet ist, auf.

Die Figuren 3 und 4 zeigen den Halteclip 1 im auf die Rohrschelle 3 gesetzten Zustand: Der Verbindungsabschnitt 1V liegt an einer seitlichen Kante bzw. einem seitlichen Rand des ebenen Abschnitts 3EA der Rohrschelle 3 an. Der Untergrundschenkel 1U liegt mit seiner ebenen Oberseite flächig an dem ebenen Abschnitt 3EA der Rohrschelle 3 an, wobei die Rastnase 13 in die Ausnehmung 3A greift. Der Mündungsschenkel ist auf der dem Untergrundschenkel 1U gegenüberliegenden Seite des ebenen Abschnitts 3EA der Rohrschelle angeordnet, wobei die vier Abstandsfüße 11 auf dem ebenen Abschnitt 3EA der Rohrschelle angeordnet sind.

Vorliegend und bevorzugt ist der Halteclip 1 so hergestellt, dass die Schenkel 1M, 1U in Richtung aufeinander vorgespannt sind. Dies kann bspw. dadurch erreicht werden, dass der Verbindungsabschnitt 1V eine entsprechende Krümmung aufweist. Auf diese Weise ist sichergestellt, dass die Rohrschelle 3 sicher durch den Halteclip 1 gehalten ist. Auch die Anordnung der Rastnase 13 in der Ausnehmung 3A dient dem sicheren Halten der Rohrschelle 3 durch den Halteclip 1.

Der Halteclip 1 wird auf der Rohrschelle 3 durch einfaches Aufschieben (in Figuren 3 und 4 von rechts kommend) des Halteclips 1 auf der Rohrschelle 3 angeordnet. Das Aufschieben erfolgt so lange, bis die Rastnase 13 in der Ausnehmung 3A angeordnet ist und der Verbindungsabschnitt 1V an der Rohrschelle 3 anschlägt.

Um nun die Rohrschelle 3 mit Hilfe des Halteclips 1 an einem Untergrund 9 zu befestigen, wird wie folgt vorgegangen: Der ebene Abschnitt 3EA der Rohrschelle 3 wird auf der Mündung eines Laufs 5 eines Schubgeräts angeordnet, wobei der Lauf 5 in den Figuren 3 und 4 links des Halteclips 1 angeordnet ist. Folgend wird der Halteclip 1 in Fig. 3 nach links geschoben, wodurch sich der ringförmige Mündungsschenkel IM öffnet und den Lauf 5 aufnimmt. Dabei schließen sich die freien Enden des Mündungsschenkels 1M hinter der Mitte des Laufs 5, so dass rund 60% des Laufs von dem Mündungsschenkel IM umfasst sind.

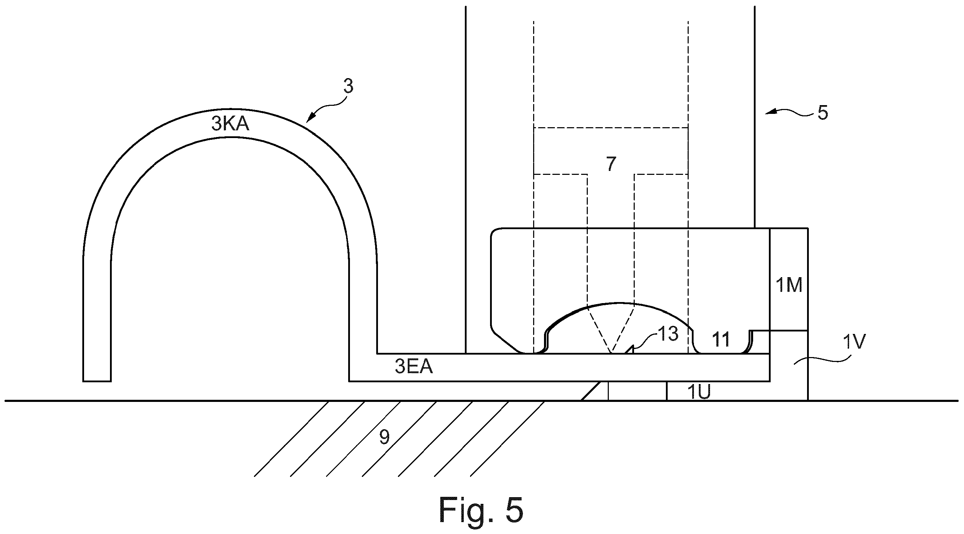

Im nächsten Schritt wird die Rohrschelle 3 auf dem Untergrund 9 an die gewünschte Stelle gehalten, d.h. an die Stelle, an der sie befestigt werden soll. Es entsteht die in Fig. 5 gezeigte Anordnung: An dem Untergrund 9 liegt der Untergrundschenkel 1U an. Der Halteclip trägt die Rohrschelle 3. Der Mündungsschenkel IM umgreift den Lauf 5, wodurch der Halteclip 1 und die Rohrschelle 3 an dem Lauf 5 gehalten sind. In dem Lauf 5 ist ein Befestigungselement 7, vorliegend ein Nagel, angeordnet.

Wird das Schubgerät ausgelöst, wird der Nagel 7 durch die Ausnehmung 3A in den Untergrund 9 geschoben bzw. geschossen, wodurch die Rohrschelle 3 an dem Untergrund 9 befestigt ist. Beim Einschießen zerstört der Nagel 7 die Rastnase 11 und somit abschnittsweise den Untergrundschenkel 1U. Wird das Schubgerät nach dem Setzen von der Rohrschelle 3 gelöst, löst sich der Mündungsschenkel IM von dem Lauf 5, so dass der Lauf zum Anordnen eines neuen Halteclips 1 mit Rohrschelle 3 bereit ist.

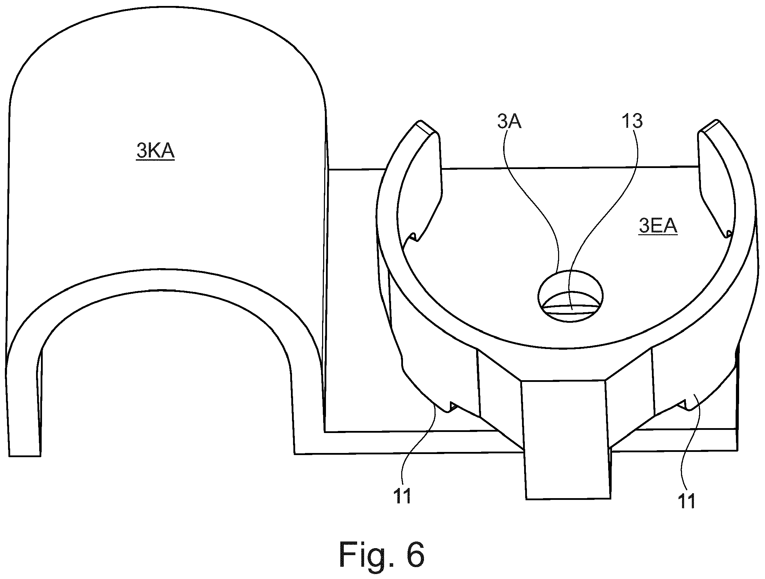

Fig. 6 zeigt den Halteclip 1 und die Rohrschelle 3 der Figuren 1-5, wobei der Halteclip 1 jedoch in der Draufsicht um 90° winkelversetzt, d.h. von der Seite, auf die Rohrschelle 3 geschoben ist. Das Aufschieben erfolgt wie zu den Fig. 1-5 beschrieben. In dieser Anordnung ergibt sich jedoch der Vorteil, dass der Lauf 5 leichter in den Halteclip 1 eingeschoben werden kann, weil der kreisförmige Abschnitt 3KA nicht im Weg ist. Auch das Einschießen eines Befestigungselements 7 erfolgt wie zu den Figuren 1-5 beschrieben.

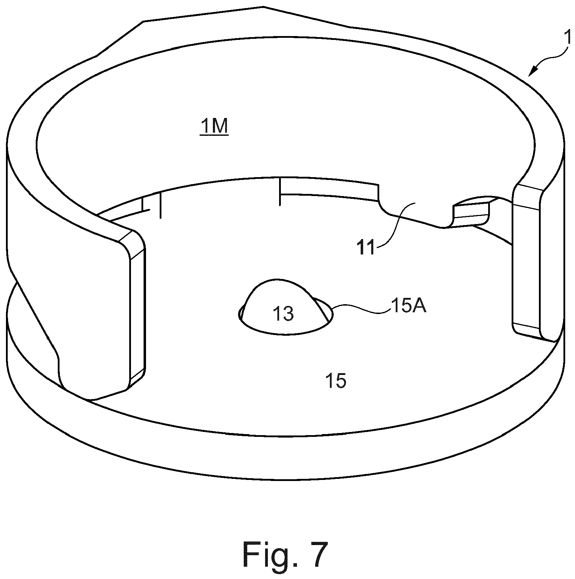

Fig. 7 zeigt die Anordnung des Halteclips 1 der Figuren 1-6 auf einer Haltescheibe 15. Die Haltescheibe 15 ist eine kreisförmige Scheibe mit einem Außendurchmesser, der dem des Halteclips 1 entspricht. In der Mitte der Haltescheibe 15 befindet sich wieder eine Ausnehmung 15A, in die die Rastnase 13 des Halteclips 1 greift und durch die ein Befestigungselement 7, wie zuvor zu den Figuren 1-5 beschrieben, in einen Untergrund 9 eingetrieben werden kann. Die vier Abstandsfüße 11 sind auf der Haltescheibe 15 angeordnet.

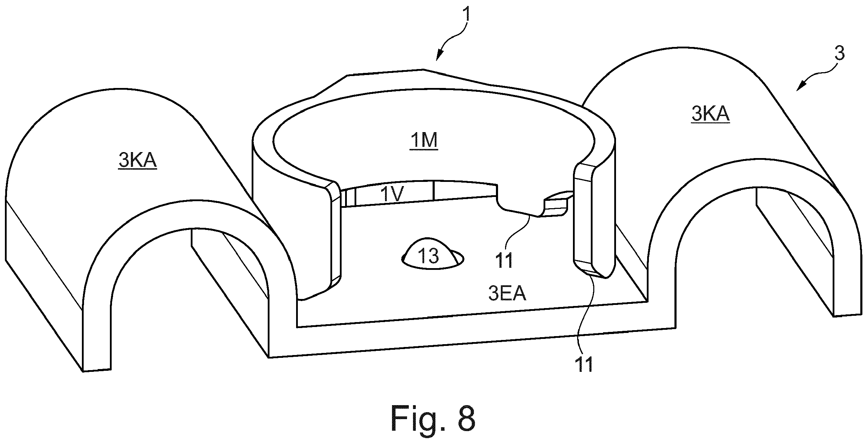

Fig. 8 zeigt eine alternative Ausführungsform der Rohrschelle 3 der Figuren 1 bis 6, bei die Rohrschelle zu beiden Enden eines ebenen Abschnitts 3EA jeweils einen kreisförmigen Abschnitt 3KA aufweist. Der Halteclip 1 ist wie zu Fig. 6 beschrieben, auf den ebenen Abschnitt 3EA aufgeschoben.

Der Halteclip 1 eignet sich insbesondere zum Halten von Rohrschellen 3, insbesondere eines ebenen Abschnitts 3EA einer Rohrschelle 3. Es können mit dem Halteclip 1 jedoch nicht nur Rohrschellen gehalten werden, sondern auch Scheiben, insbesondere Unterlegscheiben bzw. Haltescheiben, oder Halter für elektr. Leitungen, die im Massivbau verwendet werden.

### Bezugszeichenliste

- 1: Halteclip
- 1M: Mündungsschenkel
- 1U: Untergrundschenkel
- 1V: Verbindungsabschnitt
- 3: Rohrschelle
- 3A: Ausnehmung in der Rohrschelle
- 3EA: ebener Abschnitt der Rohrschelle
- 3KA: kreisförmiger Abschnitt der Rohrschelle
- 5: Lauf eines Schubgeräts
- 7: Befestigungselement (Nagel)
- 9: Untergrund
- 11: Abstandsfuß
- 13: Rastnase
- 15: Haltescheibe
- 15A: Ausnehmung in Haltescheibe

## Patentansprüche

1. Halteclip (1) zum Halten einer Rohrschelle o.dgl. (3) an einem Lauf (5) eines Schubgeräts zum Eintreiben von Befestigungselementen (7), insbes. Nägeln, durch die Rohrschelle (3) und in einen Untergrund (9) zum Befestigen der Rohrschelle (3) an dem Untergrund (9), mit einem Mündungsschenkel (1M) zur Aufnahme der Mündung des Laufs (5) und einem Untergrundschenkel (1U) zur Anlage an dem Untergrund (9), wobei die Schenkel (1M, 1U) durch einen Verbindungsabschnitt (1V) miteinander verbunden sind und jeweils an der Rohrschelle (3) anliegen, so dass die Schenkel (1M, 1U) den Halteclip (1) klemmend an der Rohrschelle (3) halten.

2. Halteclip nach Anspruch 1, **dadurch gekennzeichnet, dass** er einstückig gebildet ist und aus einem Kunststoff, insbesondere einem glasfaserverstärktem Kunststoff, oder Metall, insbesondere Federstahl, besteht.

3. Halteclip nach Anspruch 1 oder 2, **dadurch gekennzeichnet, dass** der Mündungsschenkel (1M), der Untergrundschenkel (1U) und der Verbindungsabschnitt (1V) in einer Seitenansicht eine U-Form bilden.

4. Halteclip nach Anspruch 3, **dadurch gekennzeichnet, dass** der Mündungsschenkel (1M) und/oder der Untergrundschenkel (1U) und/oder der Verbindungsabschnitt (1V) flächig an der Rohrschelle (3) anliegen.

5. Halteclip nach Anspruch 3, **dadurch gekennzeichnet, dass** der Mündungsschenkel (1M) und/oder der Untergrundschenkel (1U) und/oder der Verbindungsabschnitt (1V) mindestens einen Abstandsfuß (11) aufweisen, so dass diese (1M, 1U, 1V) im eingesetzten Zustand mit Abstand von der Rohrschelle (3) angeordnet sind.

6. Halteclip nach einem der vorangehenden Ansprüche, **dadurch gekennzeichnet, dass** der Mündungsschenkel (1M) als Ringabschnitt oder als Ring gebildet ist, um die Mündung des Laufs (5) mindestens teilweise zu umschließen, insbesondere mind. 50%, bevorzugt mind. 60% und weiter bevorzugt mind. 75% zu umschließen, um den Halteclip (1) mit der Rohrschelle (3) an dem Lauf definiert zu halten, d.h. in einer vorbestimmten Position zu halten.

7. Halteclip nach Anspruch 6, **dadurch gekennzeichnet, dass** der Mündungsschenkel (1M) als Ringabschnitt gebildet ist, so dass die Mündung des Laufs (5) seitlich durch den fehlenden Ringabschnitt in den Mündungsschenkel (1M) eingeführt werden kann.

8. Halteclip nach einem der vorangehenden Ansprüche, **dadurch gekennzeichnet, dass** der Untergrundschenkel (1U) stabförmig ausgebildet ist, insbesondere einen rechteckigen Querschnitt aufweist und bevorzugt eine Rastnase (13) am freien Ende zum Eingreifen in eine Vertiefung oder Ausnehmung der Rohrschelle aufweist, um den Halteclip an der Rohrschelle definiert zu halten, d.h. in einer vorbestimmten Position zu halten.

9. Halteclip nach einem der vorangehenden Ansprüche, **dadurch gekennzeichnet, dass** der Verbindungsabschnitt (1V) stabförmig ausgebildet ist und insbesondere einen rechteckigen Querschnitt aufweist.

10. Halteclip nach einem der vorangehenden Ansprüche, **dadurch gekennzeichnet, dass** der Mündungsschenkel (1M) als Ringabschnitt gebildet ist, insbesondere einen rechteckigen Querschnitt aufweist und der Verbindungsabschnitt (1V) mittig im Umfang des Ringabschnitts angeordnet ist, um eine symmetrische Haltekraft auf die Rohrschelle auszuüben.

11. Halteclip nach einem der vorangehenden Ansprüche, **dadurch gekennzeichnet, dass** der Mündungsabschnitt (1M) als Ringabschnitt oder als Ring gebildet ist und insbesondere vier Abstandsfüße (11), insbesondere mit gleichem Winkelabstand untereinander, aufweist, wodurch der Mündungsschenkel (1M) mit Abstand zu der Rohrschelle (3) im zusammengesetzten Zustand angeordnet ist.

12. Halteclip (1) nach einem der vorangehenden Ansprüche, der auf eine Rohrschelle o.dgl. (3) gesteckt ist.
